(19) Europäisches Patentamt
European Patent Office
Office européen des brevets

(11) EP 4 101 997 B1

(12) EUROPEAN PATENT SPECIFICATION

(45) Date of publication and mention of the grant of the patent:
**17.07.2024 Bulletin 2024/29**

(21) Application number: **21770420.4**

(22) Date of filing: **19.01.2021**

(51) International Patent Classification (IPC):
***E02F 9/26*** *(2006.01)* ***G01G 19/08*** *(2006.01)*
***E02F 3/43*** *(2006.01)* ***E02F 3/32*** *(2006.01)*

(52) Cooperative Patent Classification (CPC):
**E02F 3/435; G01G 19/083;** E02F 3/32

(86) International application number:
**PCT/JP2021/001656**

(87) International publication number:
**WO 2021/186881 (23.09.2021 Gazette 2021/38)**

(54) **WORK MACHINE**

ARBEITSMASCHINE

MACHINE DE TRAVAIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.03.2020 JP 2020048693**

(43) Date of publication of application:
**14.12.2022 Bulletin 2022/50**

(73) Proprietor: **KOBELCO CONSTRUCTION MACHINERY CO., LTD.**
**Hiroshima-shi, Hiroshima 731-5161 (JP)**

(72) Inventors:
- **UETA, Toshiro**
**Hiroshima-shi, Hiroshima 731-5161 (JP)**
- **HIRAYAMA, Michio**
**Hiroshima-shi, Hiroshima 731-5161 (JP)**
- **ENDO, Kazuomi**
**Hiroshima-shi, Hiroshima 731-5161 (JP)**

(74) Representative: **TBK**
**Bavariaring 4-6**
**80336 München (DE)**

(56) References cited:
**GB-A- 2 370 029**
**JP-A- 2000 291 076**
**JP-A- 2019 157 362**
**JP-A- 2019 158 774**
**JP-A- 2020 033 704**
**US-A1- 2019 360 169**

EP 4 101 997 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Technical Field

The present invention relates to a working machine such as a hydraulic excavator.

### Background Art

In recent years, there has been known a hydraulic excavator having a function of calculating a total weight of an excavated object loaded into a box bed, and notifying an operator whether the total weight reaches a maximum loading capacity of a dump truck or not in order to improve the efficiency in a loading work of loading the excavated object into the box bed of the dump truck. Such a device is known from document US2019360169A1.

For example, in Patent Literature 1, it is disclosed that an operation of discharging an excavated object from a bucket into a box bed is determined to be started when a relative angle between an arm for discharging the excavated object from the bucket and the bucket reaches or exceeds a threshold; a weight of the excavated object accommodated in the arm is measured at the time; and the measured weight is added.

A hydraulic excavator is capable of discharging an excavated object from a bucket into a box bed of a dump truck not only by swinging the bucket to an arm, but also by an arm pushing operation of forwardly swinging the arm to a boom while maintaining a relative angle between the boom and the bucket. However, in Patent Literature 1, the start in the discharge operation is determined based on the fact that relative angle between the arm and the bucket reaches or exceeds a threshold as described above. This causes a problem of failing to detect a discharge of an excavated object when the excavated object is discharged by the above-described arm pushing operation.

### Citation List

### Patent Literature

Patent Literature 1: Japanese Unexamined Patent Publication No. 2019-158774

### Summary of Invention

The present invention has been made in order to solve the problem described above, and the object thereof is to provide a working machine that makes it possible to accurately detect a discharge of an object accommodated in a bucket from the bucket.

A working machine according to an aspect of the present invention is provided with a main body and a working device attached to the main body. The working device includes: a working arm having a distal end movable in vertical directions and front-rear directions; and a bucket rotatably attached to the distal end and defining a space for accommodating an object and an opening face letting the space open. The working machine includes: a load detection part for detecting a load value of the object accommodated in the bucket; a posture detector for detecting a posture of the working device; an angle detection part for detecting a bucket angle that is an angle of the opening face of the bucket with respect to a vertical direction orthogonal to a horizontal plane on the basis of detection data indicating the posture of the working device detected by the posture detector; an accommodation determination part for determining whether the object is accommodated in the bucket or not on the basis of the load value detected by the load detection part; and a discharge determination part for determining that the object accommodated in the bucket is discharged when the bucket angle detected by the angle detection part is on a discharge side beyond a predetermined discharge reference angle, and the load value detected by the load detection part is smaller than a load threshold, after the accommodation determination part determines that the object is accommodated in the bucket. In the working machine, the discharge reference angle is an angle of the bucket in a posture allowing the accommodated object to be discharged.

According to the present configuration, a discharge of an accommodated object from a bucket can be accurately detected.

### Brief Description of Drawings

FIG. 1 is a view showing a hydraulic excavator that is an example of a working machine according to an embodiment of the present invention.
FIG. 2 is a diagram showing a configuration of a controller mounted on the hydraulic excavator and a circuit controlled by the controller.
FIG. 3 is an illustration showing a discharge task.
FIG. 4 is an illustration showing a dropping task.
FIG. 5 is a diagram showing an example of a display screen displayed by a display device.
FIG. 6 is a flowchart showing a process executed in the hydraulic excavator.

### Description of Embodiments

Hereinafter, an embodiment of the present invention will be described with reference to the accompanied drawings. It should be noted that the below-described embodiment is a specific example of the present invention, and will not delimit the technical scope of the present invention, which is defined by the appended claims.

Hereinafter, a preferred embodiment of the present invention will be described with reference to the drawings.

FIG. 1 shows a hydraulic excavator that is an example of a working machine according to the embodiment of the present invention. FIG. 2 is a diagram showing a configuration of a controller mounted on the hydraulic excavator and a circuit controlled by the controller.

As shown in FIG. 1 and FIG. 2, a hydraulic excavator 10 includes: a lower travelling body 11; an upper slewing body 12 slewably mounted on the lower travelling body 11; a working device 13 mounted on the upper slewing body 12; a plurality of hydraulic actuators; at least one hydraulic pump 21; a pilot pump 22; an operation device 60, a control valve 40, a pressure sensor 34, a posture sensor 30 (an example of the posture detector), and a controller 50.

The lower travelling body 11 and the upper slewing body 12 constitute a main body of the hydraulic excavator 10. The lower travelling body 11 has an unillustrated travelling device for causing the hydraulic excavator 10 to travel, and thus is capable of travelling on the ground G. The upper slewing body 12 has a slewing frame 12A, an engine room 12B mounted thereon, and a cab 12C. The engine room 12B accommodates an engine, and the cab 12C is provided with a seat where an operator sits on, various kinds of operation levers and control pedals.

The working device 13 includes a boom 14, an arm 15, and a bucket 16, and performs a loading work of loading soil and sand on a dump truck. The soil and sand are an example of an object to be accommodated in the bucket 16. The boom 14 and the arm 15 are examples of the working arm having a distal end movable in vertical directions and front-rear directions. The bucket 16 is rotatably attached to the distal end, and defines a space for accommodating an object and an opening face 16a letting the space open. The vertical directions are, for example, directions orthogonal to the ground G. The front-rear directions are, for example, directions orthogonal to both a longitudinal direction 15a of the arm 15 and the directions orthogonal to the ground G.

The loading work includes an accommodation task (excavation task) of excavating soil and sand and accommodating in the bucket 16, a transfer task of transferring the accommodated soil and sand above the dump truck, and a discharge task (soil discharge task) of discharging the soil and sand onto the dump truck.

The boom 14 includes a proximal end supported by a front portion of a slewing frame 12A to be tiltable, i.e., rotatable about a horizontal axis as indicated by an arrow A1 in FIG. 1, and a distal end on the opposite side. The arm 15 includes a proximal end attached to the distal end of the boom 14 to be rotatable about a horizontal axis as indicated by an arrow A2 in FIG. 1, and a distal end on the opposite side. The bucket 16 is attached to the distal end of the arm 15 to be rotatable as indicated by an arrow A3 in FIG. 1.

The hydraulic actuators include a plurality of hydraulic cylinders and a slewing motor 20. The hydraulic cylinders include at least one boom cylinder 17 for moving the boom 14, an arm cylinder 18 for moving the arm 15, and a bucket cylinder 19 for moving the bucket 16. Although FIG. 2 shows only one hydraulic pump 21, the hydraulic excavator 10 may include a plurality of hydraulic pumps.

The at least one boom cylinder 17 is provided between the upper slewing body 12 and the boom 14, and extends or retracts upon supply of hydraulic oil discharged from the hydraulic pump 21 to thereby swing the boom 14 in a rising direction + A1 or a lowering direction - A1.

The arm cylinder 18 is provided between the boom 14 and the arm 15, and extends or retracts upon supply of hydraulic oil to thereby swing the arm 15 in an arm pulling direction - A2 or an arm pushing direction + A2. The arm pulling direction is a direction in which the distal end of the arm 15 moves closer to the boom 14, whereas the arm pushing direction is a direction in which the distal end of the arm 15 moves away from the boom 14.

The bucket cylinder 19 is provided between the arm 15 and the bucket 16, and extends or retracts upon supply of hydraulic oil to thereby swing the bucket 16 in a dumping direction + A3 or a crowding direction - A3. The crowding direction is a direction in which an angle $\theta$ between the longitudinal direction 15a of the arm 15 and the opening face 16a of the bucket 16 shown in FIG. 1 decreases, whereas the dumping direction is a direction in which the angle $\theta$ increases.

As shown in FIG. 2, as the operation device 60, there are provided a boom operation device 61, an arm operation device 62, a bucket operation device 63, and a slewing operation device 64. The operation devices 60 respectively have operation levers 61A to 64A to be operated by an operator. Each operation device may include a hydraulic operation device, or may include an electric operation device. A single operation lever may perform functions of a plurality of operation levers. For example, a right operation lever may be provided on a front right side of the seat where the operator sits on, and may serve as a boom lever when operated in the front-rear directions, and serve as a bucket lever when operated in left-right directions. Similarly, a left operation lever may be provided on a front left side of the seat, and may serve as an arm lever when operated in the front-rear directions, and serve as a slewing lever when operated in the left-right directions. The lever pattern may be appropriately changed according to an operation instruction of the operator. FIG. 2 shows a circuit configuration of the operation devices 60 of electric operation devices.

As the control valve 40, there are provided a boom control valve 41, an arm control valve 42, a bucket control valve 43, a slewing control valve 44, a pair of boom proportional solenoid valves 45, a pair of arm proportional solenoid valves 46, a pair of bucket proportional solenoid valves 47, and a pair of slewing proportional solenoid valves 48.

For example, when the operation lever 63A of the bucket operation device 63 is operated, the operation amount of the operation lever 63A is converted into an electric signal (operation signal), and is input to the controller 50. The controller 50 inputs an instruction signal (instruction current) corresponding to the operation signal to the bucket proportional solenoid valve 47 of the pair that corresponds to the operation direction of the operation lever 63A. The bucket proportional solenoid valve 47 reduces the pressure of pilot oil discharged from the pilot pump 22 in response to an instruction signal, and transmits the reduced pilot pressure to one of a pair of pilot ports of the bucket control valve 43. Accordingly, the bucket control valve 43 opens in a direction corresponding to the pilot port which receives the pilot pressure and in a stroke corresponding to a magnitude of the pilot pressure. This consequently allows the hydraulic oil discharged from the hydraulic pump 21 to flow to a head-side chamber or a rod-side chamber of the bucket cylinder 19 at a flow rate corresponding to the stroke. Description about operation of the respective operation levers of the boom operation device 61, the arm operation device 62, and the slewing operation device 64 is omitted because they are operated in the same manner as that described above.

Although a diagram of the hydraulic circuit in the case that each operation device is hydraulic is omitted, the hydraulic circuit of the hydraulic excavator 10 performs as described below. For example, when the operation lever 63A of the bucket operation device 63 is operated, the primary pilot pressure from the pilot pump is reduced in a remotely-controlled valve of the bucket operation device 63 according to the operation amount of the operation lever 63A, and the reduced pilot pressure is output from the remotely-controlled valve. The output pilot pressure is input to one of the pair of pilot ports of the bucket control valve. Accordingly, the bucket control valve opens in a direction corresponding to the pilot port which receives the pilot pressure and in a stroke corresponding to a magnitude of the pilot pressure. This consequently allows the hydraulic oil discharged from the hydraulic pump to flow to the head-side chamber or the rod-side chamber of the bucket cylinder 19 at a flow rate corresponding to the stroke.

As shown in FIG. 2, the pressure sensor 34 includes a pressure sensor 35 for detecting a head pressure of the boom cylinder 17, and a pressure sensor 36 for detecting a rod pressure of the boom cylinder 17.

The posture sensor 30 includes a boom posture sensor 31 capable of detecting a posture of the boom 14, an arm posture sensor 32 capable of detecting a posture of the arm 15, and a bucket posture sensor 33 capable of detecting a posture of the bucket 16. For example, the boom posture sensor 31 includes an angle sensor for detecting a boom angle which is a swing angle of the boom 14 with respect to the upper slewing body 12. For example, the arm posture sensor 32 includes an angle sensor for detecting an arm angle which is a swing angle of the arm 15 with respect to the boom 14. For example, the bucket posture sensor 33 includes an angle sensor for detecting a bucket angle which is a swing angle of the arm 15 with respect to the bucket 16. The boom angle, the arm angle, and the bucket angle are respectively detected in a predetermined sampling cycle, and are input to the controller 50 as detection data. The posture sensor 30 may include, for example, an Inertial Measurement Unit: IMU.

The controller 50 includes, for example, a computer. The controller 50 includes an operation determination part 51, an angle detection part 52, a load detection part 53, an accommodation determination part 54, a discharge determination part 55, a temporary storage part 56, a cumulative load value calculation part 57, a display control part 58, and memory 59. The operation determination part 51 to the display control part 58 may be embodied through an execution of a predetermined program by a CPU of the controller 50, or may include a dedicated electric circuit. The memory 59 includes a rewritable non-volatile storage device, e.g., Flash Memory.

For example, the operation device 6 includes an electric operation device shown in FIG. 2. The operation device 60 inputs to the controller 50 an operation signal indicating an operation amount and an operation direction applied to the corresponding operation lever. The operation determination part 51 may determine an operation input to the operation device 60 on the basis of the input operation signal.

The operation to be determined by the operation determination part 51 includes, for example, an operation of scooping up an object accommodated in the bucket 16 as a result of an excavation by the hydraulic excavator 10, a boom raising operation, a boom lowering operation, an arm pushing operation, a boom pulling operation, a bucket raising operation, and a bucket lowering operation.

The operation device 60 may include a hydraulic operation device. In this case, the operation determination part 51 may determine the input operation on the basis of a pilot pressure corresponding to the operation amount. Further, the operation determination part 51 may determine the input operation on the basis of the detection data detected by the posture sensor 30.

The angle detection part 52 detects a bucket angle being an angle of the opening face of the bucket 16 with respect to a vertical direction orthogonal to a horizontal plane on the basis of detection data indicating the posture of the working device 13 detected by the posture sensor 30.

FIG. 3 is an illustration showing a discharge task. The horizontal plane SA extends in a direction orthogonal to the gravity direction. The vertical direction L1 is a direction that is parallel to the gravity direction and is orthogonal to the horizontal plane SA. The opening face 16a of the bucket 16 is adapted for inletting soil and sand, and is formed in a plane on a distal end T1 and a proximal end T2 of the bucket 16. The bucket angle $\alpha$ indicates an angle of the opening face 16a with respect to the vertical direction L1. In the present embodiment, the bucket angle $\alpha$ is given positive to the discharge side D1 with respect to the vertical direction L1, and is given negative to the non-discharge side D2 with respect to the vertical direction L1. However, this is merely an example. The positive-negative relationship of the bucket angle $\alpha$ may be opposite to that described above. The discharge side D1 corresponds to a dumping direction in which the bucket 16 swings. The non-discharge side D2 corresponds to a crowding direction in which the bucket 16 swings.

For example, when the ground G (see FIG. 1) is parallel to the horizontal plane SA, the angle detection part 52 sets a direction orthogonal to the ground G as the vertical direction L1. The angle detection part 52 calculates a position of each of the proximal end T2 and the distal end T1 on the basis of the boom angle, the arm angle, and the bucket angle that are detected by the posture sensor 30, and known size data on the boom 14, the arm 15, and the bucket 16. Thereafter, the angle detection part 52 may calculate an angle formed between a line connecting the proximal end T2 with the distal end T1 and the vertical direction L1 as the bucket angle $\alpha$.

On the other hand, when the ground G is not parallel to the horizontal plane SA, i.e., the hydraulic excavator 10 is located on a slope, the angle detection part 52 sets the horizontal plane SA on the basis of an inclination angle of the hydraulic excavator 10 detected by an inclination sensor 80, and sets a direction orthogonal to the horizontal plane SA as the vertical direction L1. Thereafter, the proximal end T2 and the distal end T1 may be calculated in the manner described above, and an angle formed between a line connecting the proximal end T2 with the distal end T1 and the vertical direction L1 may be calculated as the bucket angle $\alpha$. Accordingly, the bucket angle $\alpha$ can be accurately calculated even when the hydraulic excavator 10 works on a slope by calculating the bucket angle $\alpha$ in consideration of an inclination angle detected by the inclination sensor 80.

The discharge reference angle $\eta$ refers to an angle indicating that the bucket 16 is in a posture allowing the accommodated object to be discharged. When the bucket angle $\alpha$ is on the discharge side D1 beyond the discharge reference angle $\eta$, the bucket 16 can discharge the accommodated object by the force of gravity.

For example, when the bucket 16 is swung toward the discharge side D1, dry and fine soil and sand start being discharged before the opening face 16a turns to be parallel to the vertical direction. Accordingly, in the present embodiment, the discharge reference angle $\eta$ is set to a predetermined angle on the non-discharge side D2 with respect to the vertical direction L1. The discharge reference angle $\eta$ includes, for example, angles such as - 10 degrees and - 20 degrees.

In the present embodiment, the angle detection part 52 repeatedly calculates a bucket angle $\alpha$ of the accommodated object in a predetermined sampling cycle while the hydraulic excavator 10 is in operation.

The load detection part 53 detects a load value of an object accommodated in the bucket 16. For example, the load detection part 53 calculates the load value of the accommodated object in a manner described below.

In the present embodiment, the load detection part 53 calculates a load of an object accommodated in the bucket 16 by using the following Equation (1).

$$M = M1 + M2 + M3 + W \times L \quad ... (1)$$

In Equation (1), the sign "M" denotes a moment of the boom cylinder 17 around a boom foot pin. The sign "M1" denotes a moment of the boom 14 around the boom foot pin. The sign "M2" denotes a moment of the arm 15 around the boom foot pin. The sign "M3" denotes a moment of the bucket 16 around the boom foot pin. The sign "W" denotes a load of an object accommodated in the bucket 16. The sign "L" denotes a horizontal distance from the boom foot pin to the proximal end T2 of the bucket 16.

The moment M is calculated on the basis of the head pressure and the rod pressure of the boom cylinder 17. The moment M1 is calculated by a product of a distance from a gravity center of the boom 14 to the boom foot pin and a weight of the boom 14. The moment M2 is calculated by a product of a distance from a gravity center of the arm 15 to the boom foot pin and a weight of the arm 15. The moment M3 is calculated by a product of a distance from a gravity center of the bucket 16 to the boom foot pin and a weight of the bucket 16.

A position of the gravity center of the boom 14, a position of the gravity center of the arm 15, and a position of the gravity center of the bucket 16 are respectively calculated on the basis of detection data detected by the posture sensor 30. The head pressure of the boom cylinder 17 is detected by the pressure sensor 35, and the rod pressure of the boom cylinder 17 is detected by the pressure sensor 36. The distance L is calculated on the basis of the detection data of the posture sensor 30.

In the present embodiment, the load detection part 53 repeatedly calculates a load value of the accommodated object in a predetermined sampling cycle while the hydraulic excavator 10 is in operation.

The load value of the accommodated object may be calculated not exclusively according to the way described above but also by using other ways. For example, the load detection part 53 may calculate a volume of the accommodated object on the basis of image data of an opening portion of the bucket 16 taken by a camera or a depth sensor, and calculate the load value on the basis of the calculation result.

The accommodation determination part 54 determines whether the object is accommodated in the bucket 16 or not on the basis of the load value detected by the load detection part 53. In the present embodiment, the accommodation determination part 54 determines that an object is accommodated in the bucket 16, when load values repeatedly calculated by the load detection part 53 fluctuate not larger than a predetermined value and then stabilizes, and a load value detected by the load detection part 53 at this time is equal to or greater than a load threshold. The load threshold is a predetermined value indicating that the bucket 16 is emptied. The load threshold is set to 100 kg, 200 kg, for example. The setting of the load threshold to such a great value as 100kg and 200 kg involves consideration of a calculation tolerance for a load value calculated by Equation (1).

During the accommodation task, the load value considerably fluctuates because the bucket 16 comes into contact with the ground G, and the amount of the accommodated object changes. On the other hand, when the accommodation task ends, the load value stabilizes because the bucket 16 is away from the ground G, and the amount of the object accommodated in the bucket 16 is invariable. Accordingly, the accommodation determination part 54 determines that the object is accommodated in the bucket 16 when the load value is not smaller than the load threshold and stabilizes.

The discharge determination part 55 determines that the object accommodated in the bucket 16 is discharged, when the bucket angle α detected by the angle detection part 52 is on the discharge side D1 beyond the discharge reference angle η, and the load value detected by the load detection part 53 is smaller than the load threshold after the accommodation determination part 54 determines that the object is accommodated in the bucket 16.

Reference is made to FIG. 3. In the state S100, although the opening face 16a does not face the horizontal plane SA, the bucket angle α is on the discharge side D1 beyond the discharge reference angle η. Thus, the bucket 16 is in a dischargeable posture allowing the accommodated object to be discharged. Therefore, the accommodated object goes out of the bucket 16.

In the state S200, the bucket angle α is further on the discharge side D1 with respect to the vertical direction L1, and the opening face 16a faces the horizontal plane SA. Thus, a larger amount of accommodated object is discharged compared with the state S100. When all the accommodated object is discharged in this manner, the discharge task ends.

After the accommodation determination part 54 determines that the object is accommodated in the bucket 16, further, the discharge determination part 55 determines that the dropping task of discharging a part of the object accommodated in the bucket 16 is performed when the bucket angle α shifts to the non-discharge side D2 beyond the discharge reference angle η after shifting to the discharge side D1 beyond the discharge reference angle η, and the load value detected by the load detection part 53 is equal to or greater than the load threshold.

FIG. 4 is an illustration showing the dropping task. In the state S300, the dropping task is performed because the amount of the accommodated object exceeds a target amount even at the end of the accommodation task. Specifically, in the state S300, the bucket 16 accommodating the object is swung to the discharge side D1 to shift the bucket angle α to the discharge side D1 beyond the discharge reference angle η. Consequently, the bucket 16 is in the dischargeable posture to decrease the accommodated object.

In the state S400, the bucket 16 is swung to the non-discharge side D2, so that the bucket angle α is on the non-discharge side D2 beyond the discharge reference angle η. Consequently, the bucket 16 is in a non-dischargeable posture, and the discharge task ends with a certain amount of object remaining in the bucket 16. If the amount of the object accommodated in the bucket 16 still exceeds the target amount after the execution of the operation of the state S300 and the operation of the state S400, the operations of the state S300 and the state S400 are repeated. The dropping task is performed in this way until the amount of the object accommodated in the bucket 16 decreases to the target amount. After the dropping task ends, the transfer task is performed to move the bucket 16 above the box bed of the dump truck, and then the discharge task is performed to discharge the accommodated object onto the box bed. In this way, the series of tasks are repeatedly performed to load the object onto the box bed.

Reference is made again to FIG. 2. The temporary storage part 56 temporarily stores a load value of the accommodated object in the memory 59 when the accommodation determination part 54 determines that the obj ect is accommodated in the bucket 16. Accordingly, a load value of the object which is accommodated in the bucket 16 immediately after the accommodation task is completed is temporarily stored in the memory 59.

The cumulative load value calculation part 57 calculates a cumulative load value of the object by adding the load value temporarily stored in the memory 59 when the discharge determination part 55 determines that the object accommodated in the bucket 16 is discharged. The cumulative load value is stored in the memory 59. Further, in a case that a target amount for the cumulative load value is preset, the cumulative load value calculation part 57 calculates a difference between the target amount and the calculated cumulative load value.

The display control part 58 causes a display device 70 to display a variety of information. For example, the display control part 58 causes the display device 70 to display a display screen G1 shown in FIG. 5.

The memory 59 stores the load value of the object temporarily stored in the temporary storage part 56. The memory 59 stores the cumulative load value calculated by the cumulative load value calculation part 57 and the target value thereof.

The inclination sensor 80 detects an inclination angle of the hydraulic excavator 10 with respect to the horizontal plane SA. The inclination angle is an angle of the ground G (slope) on which the hydraulic excavator 10 is with respect to the horizontal plane SA, for example.

In a hydraulic excavator 10 supposed to mainly work over flat land, the inclination sensor 80 may be omitted. In this case, the angle detection part 52 may calculate a bucket angle $\alpha$ in the assumption that the ground G is the horizontal plane SA.

The display device 70 includes, for example, a display device such as a liquid crystal panel or an organic EL panel. The display device 70 is disposed at a position which enables an operator in the cab 12C of the hydraulic excavator 10 to see it. FIG. 5 is a diagram showing an exemplary display screen G1 displayed by the display device 70. The display screen G1 includes a distal end load indication field 501, a carry load indication field 502, a target load indication field 503, and a loading work number indication field 504.

The distal end load indication field 501 indicates a load value, detected by the load detection part 53, of an object currently accommodated by the bucket 16. Here, a load value of 0.0 t is indicated. The carry load indication field 502 indicates a cumulative load value calculated by the cumulative load value calculation part 57. Here, a cumulative load value of 0.0 t is indicated due to the fact that the loading onto the dump truck is not started. The target load indication field 503 indicates a target value of the cumulative load value of an object to be loaded onto the box bed of the dump truck. The target value is a value preliminarily input by the operator. The loading work number indication field 504 indicates the number of discharge tasks of discharging the object onto the box bed of the dump truck. Here, the discharge task is not performed. Thus, the fraction 0/4 is indicated. The denominator of the fraction 0/4 denotes the number of discharge tasks that is required to be performed so that the cumulative load value reaches the target value thereof. The number of tasks is calculated, for example, by dividing the target value of the cumulative load value by a load value of soil and sand corresponding to the capacity of the bucket 16.

The display device 70 may be a display device such as a personal computer and a mobile information terminal that are disposed at a place apart from the hydraulic excavator 10.

Next, a process in the hydraulic excavator 10 will be described. FIG. 6 is a flowchart showing a process executed in the hydraulic excavator 10. Concurrently with the process, the angle detection part 52 is assumed to repeatedly execute a process of detecting a bucket angle $\alpha$ in a predetermined sampling cycle, and the load detection part 53 is assumed to repeatedly execute a process of detecting a load value in a predetermined sampling cycle. Further, the cumulative load value is assumed to be reset at the start of the flow in this flowchart. In a working machine including a cab 12C provided with a loading work button indicative of a start of the loading work, the flow in the flowchart in FIG. 6 may start when the loading work button is pressed by the operator. Subsequently, the flow in the flowchart in FIG. 6 may end when the loading work ends, and the loading work button is pressed again by the operator.

In Step S1, the accommodation determination part 54 determines whether a load value detected by the load detection part 53 stabilizes, and a load value at this time is not smaller than a load threshold. When the load value is not smaller than the load threshold (YES in Step S1), the accommodation determination part 54 determines that an object is accommodated in the bucket 16, and the flow proceeds to Step S2. On the other hand, when the load value is smaller than the load threshold (NO in Step S1), the accommodation determination part 54 determines that an object is not accommodated in the bucket 16, and the process returns to Step S1.

In Step S2, the temporary storage part 56 temporarily stores, in the memory 59, the load value detected when determined to be stabilized in Step S1. In Step S3, the discharge determination part 55 determines whether the latest bucket angle $\alpha$ detected by the angle detection part 52 is larger than the discharge reference angle $\eta$ or not. With reference to FIG. 3, in the present embodiment, the bucket angle $\alpha$ and the discharge reference angle $\eta$ are given positive to the discharge side D1 with respect to the vertical direction L1. Thus, when the bucket angle $\alpha$ is larger than the discharge reference angle $\eta$, the bucket angle $\alpha$ is on the discharge side D1 beyond the discharge reference angle $\eta$.

When the bucket angle $\alpha$ is larger than the discharge reference angle $\eta$ (YES in Step S3), the flow proceeds to Step S4. On the other hand, when the bucket angle $\alpha$ is equal to or smaller than the discharge reference angle $\eta$ (NO in Step S3), the process returns to Step S3. Accordingly, the flow waits for Step S3 until the bucket angle $\alpha$ shifts to the discharge side D1 beyond the discharge reference angle $\eta$.

In Step S4, the discharge determination part 55 determines whether the latest load value detected by the load detection part 53 is smaller than the load threshold or not. When the load value is equal to or greater than the load threshold (NO in Step S4), the flow proceeds to Step S5. The state of NO in Step S4 indicates a state where the object is still left in the bucket 16 although the bucket 16 is in a dischargeable posture.

On the other hand, when the load value is smaller than the load threshold (YES in Step S4), the flow proceeds to Step S7. The state of YES in Step S4 indicates a state where almost all the object accommodated in the bucket 16 is discharged.

In Step S5, the discharge determination part 55 determines whether the bucket angle $\alpha$ is equal to or smaller than the discharge reference angle $\eta$ or not. When the bucket angle $\alpha$ is larger than the discharge reference angle $\eta$ (NO in Step S5), the flow returns to Step S3. The state of NO in Step S5 indicates that the bucket 16 is in the dischargeable posture with the object still left in the bucket 16, wherein the accommodated object decreases in the discharge task or the dropping task.

On the other hand, when the bucket angle $\alpha$ is equal to or smaller than the discharge reference angle $\eta$

(YES in Step S5), the bucket 16 is put in a non-dischargeable posture with the object still left in the bucket 16. The dropping task is determined to be ended once, and the flow returns to Step S3.

In Step S6, the temporary storage part 56 updates the load value temporarily stored in the memory 59 with the latest load value detected in Step S4. This allows the load value temporarily stored in the memory 59 to be updated with the load value of the accommodated object at the end of the dropping task. When the update ends, the flow returns to Step S3.

In Step S7, the cumulative load value calculation part 57 calculates a cumulative load value by adding a load value temporarily stored in the memory 59. Accordingly, a cumulative load value of the accommodated object discharged by the bucket 16 from the start of the loading work to the present can be obtained. When the process of Step S7 ends, the flow returns to Step S1, and the flow starting from Step 1 is subsequently executed.

For example, when the working machine is in the state S300 in FIG. 4 during the dropping task, a determination of YES is made in Step 3 because the bucket 16 is in the dischargeable posture, and a determination of NO is made in Step 4 because the object is still left in the bucket 16. Subsequently, in the state S400 in FIG. 4, a determination of NO is made in Step 5 because the bucket 16 is in the non-dischargeable posture, and the flow returns to Step S3. Further, when the dropping task continues, a loop consisting of YES in Step S3, NO in Step S4, and NO in Step S5 is repeated. Subsequently, when the dropping task ends, the transfer task is performed with the bucket 16 put in the non-dischargeable posture. Thus, the determination of NO is made in Step S3, and the flow waits at Step S3.

Thereafter, when the bucket 16 is positioned above the box bed of the dump truck and the transfer task ends, the discharge task starts. When the discharge task starts, the bucket 16 is put in the dischargeable posture, and thus the determination of YES is made in Step S3. When the bucket 16 is emptied, the determination of YES is made in Step S4. Thereafter, the load value is added in Step S7.

As described above, in the present embodiment, attention is paid to a bucket angle $\alpha$ that is an angle of the opening face 16a of the bucket 16 with respect to the vertical direction L1. An accommodated object is determined to be discharged when the bucket angle $\alpha$ is on the discharge side D1 beyond the discharge reference angle $\eta$, and the load of the accommodated object is smaller than the load threshold. Therefore, according to the present configuration, a discharge of an accommodated object can be accurately detected even when, for example, the accommodated object is discharged by an arm pushing operation in which a bucket angle is maintained constant.

The embodiment may be modified as described below.

The flowchart in FIG. 6 may be added with, before Step S1, a step that the operation determination part 51 detects an input of the operation of scooping up. In this case, with the flowchart in FIG. 6, the process proceeds to Step S1 if the operation of scooping up is detected, and the process returns to Step S1 if the operation of scooping up is not detected.

In the flowchart in FIG. 6, the load threshold in Step S1 and the load threshold in Step S4 may have the same value, or may have different values.

(Summary of the Embodiment)

A working machine according to an aspect of the present invention is provided with a main body and a working device attached to the main body. The working device includes: a working arm having a distal end movable in vertical directions and front-rear directions; and a bucket rotatably attached to the distal end and defining a space for accommodating an object and an opening face letting the space open. The working machine includes: a load detection part for detecting a load value of the object accommodated in the bucket; a posture detector for detecting a posture of the working device; an angle detection part for detecting a bucket angle that is an angle of the opening face of the bucket with respect to a vertical direction orthogonal to a horizontal plane on the basis of detection data indicating the posture of the working device detected by the posture detector; an accommodation determination part for determining whether the object is accommodated in the bucket or not on the basis of the load value detected by the load detection part; and a discharge determination part for determining that the object accommodated in the bucket is discharged when the bucket angle detected by the angle detection part is on a discharge side beyond a predetermined discharge reference angle, and the load value detected by the load detection part is smaller than a load threshold, after the accommodation determination part determines that the object is accommodated in the bucket. In the working machine, the discharge reference angle is an angle of the bucket in a posture allowing the accommodated object to be discharged.

In the present configuration, attention is paid to a bucket angle that is an angle of the opening face of the bucket with respect to the vertical direction. An accommodated object is determined to be discharged when the bucket angle is on the discharge side beyond the discharge reference angle, and the load of the accommodated object is smaller than the load threshold. Therefore, a discharge of an accommodated object can be detected even when, for example, the accommodated object is discharged by an arm pushing operation that is performed while maintaining an angle between the arm and the bucket constant. Thus, the discharge of the accommodated object can be accurately detected.

In the working machine, preferably, the discharge determination part may determine that a dropping task of discharging a part of the object accommodated in the bucket is performed when the bucket angle is on a non-discharge side beyond the discharge reference angle after the bucket angle is on the discharge side beyond the discharge reference angle, and the load value detected by the load detection part is equal to or greater than the load threshold, after the accommodation determination part determines that the object is accommodated in the bucket.

In a working machine, an operation of swinging the bucket to the discharge side and an operation of swinging the bucket to the non-discharge side are liable to be performed more than once in order to discharge a part of the object accommodated in the bucket. In this operation, the object is still left in the bucket even after the operation is completed. The present configuration makes it possible to determine that a dropping task of discharging a part of the accommodated object is performed as long as the bucket angle is on the non-discharge side beyond the discharge reference angle after the bucket angle is on the discharge side beyond the discharge reference angle, and the load value is equal to or greater than the load threshold. Therefore, according to the present configuration, the dropping task can be accurately detected.

In the working machine, preferably, the discharge reference angle may be a predetermined angle to the vertical direction and be on the non-discharge side.

The object to be accommodated includes the one smoothly separable from a bucket, such as dry fine soil, and the one hardly separable from the bucket, such as humid soil. An accommodated object smoothly separable from the bucket is discharged before the opening face of the bucket turns to be parallel to the vertical direction as the bucket is swung to the discharge side. In the present configuration, the discharge reference angle is a predetermined angle to the vertical direction and is on the non-discharge side. Therefore, according to the present configuration, a discharge of an accommodated object can be accurately detected even when a substance smoothly separable from the bucket is accommodated as the object.

The working machine may preferably further include a temporary storage part for temporarily storing the load value of the accommodated object in the memory when the accommodation determination part determines that the object is accommodated in the bucket, and a cumulative load value calculation part for calculating a cumulative load value of the accommodated object by adding a load value temporarily stored in the memory when the discharge determination part determines that the object accommodated in the bucket is discharged.

According to the present configuration, the load value is temporarily stored in the memory. Therefore, for example, when the amount of the accommodated object is changed during an operation, the temporarily stored load value can be updated with the changed load value of the accommodated object. This prevents the cumulative load value from being calculated by the addition of the unchanged load value. Thus, a cumulative load value can be accurately detected.

In the working machine, preferably, the discharge determination part may determine that the dropping task of discharging a part of the object accommodated in the bucket is performed when the bucket angle is on the non-discharge side beyond the discharge reference angle after the bucket angle is on the discharge side beyond the discharge reference angle, and the load value detected by the load detection part is equal to or greater than the load threshold, after the accommodation determination part determines that the object is accommodated in the bucket, and the temporary storage part may update the load value temporarily stored in the memory with the load value detected by the load detection part after the discharge determination part determines that the dropping task is performed.

According to the present configuration, when the dropping task is determined to be performed, the load value temporarily stored in the memory is updated with the load value detected when the dropping task is determined to be performed. Therefore, the cumulative load value can be calculated by taking into account the load value of the accommodated object partially dropped off by the dropping task.

## Claims

**1.** A working machine (10) provided with a main body (12) and a working device attached to the main body,

the working device including:

a working arm (15) having a distal end movable in vertical directions and front-rear directions; and
a bucket (16) rotatably attached to the distal end and defining a space for accommodating an object and an opening face letting the space open,

the working machine comprising:

a load detection part (53) for detecting a load value of the object accommodated in the bucket;
a posture detector (30) for detecting a posture of the working device;
an angle detection (52) part for detecting a bucket angle that is an angle of the opening face of the bucket with respect to a vertical direction orthogonal to a horizontal plane on the basis of detection data indicating the posture of the working device detected by the posture detector;
**characterised in that** the working machine further comprises an accommodation determination part (54) for determining whether the object is accommodated in the bucket or not on the basis of the load value detected by the load detection part; and
a discharge determination part for determining that the object accommodated in the bucket is discharged when the bucket angle detected by the angle detection part is on a discharge side beyond a predetermined discharge reference angle, and the load value detected by the load detection part is smaller than a load threshold, after the accommodation determination part determines that the object is accommodated in the bucket, wherein
the discharge reference angle is an angle of the bucket in a posture allowing the accommodated object to be discharged.

**2.** The working machine according to claim 1, wherein the discharge determination part determines that a dropping task of discharging a part of the object accommodated in the bucket is performed when the bucket angle is on a non-discharge side beyond the discharge reference angle after the bucket angle is on the discharge side beyond the discharge reference angle, and the load value detected by the load detection part is equal to or greater than the load threshold, after the accommodation determination part determines that the object is accommodated in the bucket.

**3.** The working machine according to claim 1 or 2, wherein
the discharge reference angle is a predetermined angle to the vertical direction and is on the non-discharge side.

**4.** The working machine according to any one of claims 1 to 3, further comprising:

a memory;
a temporary storage part for temporarily storing the load value of the accommodated object in the memory when the accommodation determination part determines that the object is accommodated in the bucket; and
a cumulative load value calculation part for calculating a cumulative load value of the accommodated object by adding a load value temporarily stored in the memory when the discharge determination part determines that the object accommodated in the bucket is discharged.

**5.** The working machine according to claim 4, wherein

the discharge determination part determines that a dropping task of discharging a part of the object accommodated in the bucket is performed when the bucket angle is on the non-discharge side beyond the discharge reference angle after the bucket angle is on the discharge side beyond the discharge reference angle, and the load value detected by the load detection part is equal to or greater than the load threshold, after the accommodation determination part determines that the object is accommodated in the bucket, and
the temporary storage part updates the load value temporarily stored in the memory with the load value detected by the load detection part after the discharge determination part determines that the dropping task is performed.

**Patentansprüche**

**1.** Arbeitsmaschine (10), die mit einem Hauptkörper (12) und einer Arbeitseinrichtung versehen ist, die an dem Hauptkörper befestigt ist,

wobei die Arbeitseinrichtung Folgendes aufweist:

einen Arbeitsarm (15) mit einem distalen Ende, das in Vertikalrichtungen und Vorwärts-Rückwärtsrichtungen bewegbar ist; und
eine Schaufel (16), die an dem distalen Ende drehbar befestigt ist und einen Raum zum Aufnehmen eines Objekts und eine Öffnungsfläche definiert, die den Raum freigibt,

die Arbeitsmaschine Folgendes aufweist:

einen Lasterfassungsteil (53) zum Erfassen eines Lastwerts des Objekts, das in der Schaufel aufgenommen ist;
eine Stellungserfassungeinrichtung (30) zum Erfassen einer Stellung der Arbeitseinrichtung;
einen Winkelerfassungsteil (52) zum Erfassen eines Schaufelwinkels, der ein Winkel der Öffnungsfläche der Schaufel in Bezug auf eine Vertikalrichtung ist, die senkrekt zu einer Horizontalebene ist, auf der Grundlage von Erfassungsdaten, die die Stellung der Arbeitseinrichtung angeben, die durch die Stellungserfassungeinrichtung erfasst wird;
**dadurch gekennzeichnet, dass** die Arbeitsmaschine ferner
einen Aufnahmebestimmungsteil (54) zum Bestimmen, ob das Objekt in der Schaufel aufgenommen ist oder nicht, auf der Grundlage des Lastwerts, der durch den Lasterfassungsteil erfasst wird; und
einen Entladungsbestimmungsteil zum Bestimmen, dass das Objekt, das in der Schaufel aufgenommen ist, entladen ist, wenn der Schaufelwinkel, der durch den Winkelerfassungsteil erfasst wird, auf einer Entladungsseite jenseits eines vorbestimmten Entladungsreferenzwinkels ist, und der Lastwert, der durch den Lasterfassungsteil erfasst wird, kleiner als ein Lastschwellenwert ist, nachdem der Aufnahmebestimmungsteil bestimmt, dass das Objekt in der Schaufel aufgenommen ist, aufweist, wobei
der Entladungsreferenzwinkel ein Winkel der Schaufel in einer Stellung ist, die dem aufgenommenen Objekt ermöglicht, entladen zu werden.

**2.** Arbeitsmaschine nach Anspruch 1, wobei der Entladungsbestimmungsteil bestimmt, dass eine Abladeaufgabe zum Entladen eines Teils des Objekts, das in der Schaufel aufgenommen ist, ausgeführt wird, wenn der Schaufelwinkel auf einer Nicht-Entladungsseite jenseits des Entladungsreferenzwinkels ist, nachdem der Schaufelwinkel auf der Entladungsseite jenseits des Entladungsreferenzwinkels ist, und der Lastwert, der durch den Lasterfassungsteil erfasst wird, gleich oder größer als der Lastschwellenwert ist, nachdem der Aufnahmebestimmungsteil bestimmt, dass das Objekt in der Schaufel aufgenommen ist.

**3.** Arbeitsmaschine nach Anspruch 1 oder 2, wobei der Entladungsreferenzwinkel ein vorbestimmter Winkel zu der Vertikalrichtung ist und auf der Nicht-Entladungsseite ist.

**4.** Arbeitsmaschine nach einem der Ansprüche 1 bis 3, ferner mit:

einem Speicher;
einem Zwischenspeicherteil zum vorübergehenden Speichern des Lastwerts des aufgenommenen Objekts in dem Speicher, wenn der Aufnahmebestimmungsteil bestimmt, dass das Objekt in der Schaufel aufgenommen ist; und
einem Kumulativer-Lastwert-Berechnungsteil zum Berechnen eines kumulativen Lastwerts des aufgenommenen Objekts durch Addieren eines Lastwerts, der vorübergehend in dem Speicher gespeichert ist, wenn der Entladungsbestimmungsteil bestimmt, dass das Objekt, das in der Schaufel aufgenommen ist, entladen ist.

**5.** Arbeitsmaschine nach Anspruch 4, wobei

der Entladungsbestimmungsteil bestimmt, dass eine Abladeaufgabe des Entladens eines Teils des Objekts, das in der Schaufel aufgenommen ist, ausgeführt wird, wenn der Schaufelwinkel auf der Nicht-Entladungsseite jenseits des Entladungsreferenzwinkels ist, nachdem der Schaufelwinkel auf der Entladungsseite jenseits des Entladungsreferenzwinkels ist, und der Lastwert, der durch den Lasterfassungsteil erfasst wird, gleich oder größer als der Lastschwellenwert ist, nachdem der Aufnahmebestimmungsteil bestimmt, dass das Objekt in der Schaufel aufgenommen ist, und
der Zwischenspeicherteil den Lastwert, der vorübergehend in dem Speicher gespeichert ist, mit dem Lastwert aktualisiert, der durch den Lasterfassungsteil erfasst wird, nachdem der Entladungsbestimmungsteil bestimmt, dass die Abladeaufgabe ausgeführt wird.

**Revendications**

**1.** Machine de travail (10) pourvue d'un corps principal (12) et d'un dispositif de travail attaché au corps principal,

le dispositif de travail comprenant :

un bras de travail (15) ayant une extrémité distale qui est mobile dans des directions verticales et dans des directions avant-arrière ; et
un godet (16) fixé de manière rotative à l'extrémité distale et définissant un espace pour accueillir un objet et une face d'ouverture qui laisse l'espace ouvert,

la machine de travail comprenant :

une partie de détection de charge (53) pour détecter une valeur de la charge de l'objet accueilli dans le godet ;
un détecteur de posture (30) pour détecter la posture du dispositif de travail ;
une partie de détection d'angle (52) pour détecter un angle de godet qui est un angle de la face d'ouverture du godet par rapport à une direction verticale orthogonale à un plan horizontal sur la base des données de détection indiquant la posture du dispositif de travail détectée par le détecteur de posture ;
**caractérisée en ce que** la machine de travail comprend en outre
une partie de détermination d'accueil (54) pour déterminer si l'objet est accueilli dans le godet ou non sur la base de la valeur de la charge détectée par la partie de détection de charge ; et

une partie de détermination de décharge pour déterminer que l'objet accueilli dans le godet est déchargé lorsque l'angle du godet détecté par la partie de détection d'angle est sur un côté de décharge au-delà d'un angle de référence de décharge prédéterminé, et que la valeur de la charge détectée par la partie de détection de charge est inférieure à un seuil de charge, après que la partie de détermination d'accueil détermine que l'objet est accueilli dans le godet, dans laquelle

l'angle de référence de décharge est un angle du godet dans une posture permettant le déchargement de l'objet accueilli.

**2.** Machine de travail selon la revendication 1, dans laquelle
la partie de détermination de décharge détermine qu'une tâche de chute consistant à décharger une partie de l'objet accueilli dans le godet est effectuée lorsque l'angle du godet se trouve sur un côté non-décharge au-delà de l'angle de référence de décharge après que l'angle du godet se trouve sur le côté de décharge au-delà de l'angle de référence de décharge, et que la valeur de la charge détectée par la partie de détection de charge est égale ou supérieure au seuil de charge, après que la partie de détermination d'accueil détermine que l'objet est accueilli dans le godet.

**3.** Machine de travail selon la revendication 1 ou 2, dans laquelle
l'angle de référence de décharge est un angle prédéterminé par rapport à la direction verticale et se trouve sur le côté non-décharge.

**4.** Machine de travail selon l'une quelconque des revendications 1 à 3, comprenant en outre :

une mémoire ;

une partie de stockage temporaire pour stocker temporairement la valeur de la charge de l'objet accueilli dans la mémoire lorsque la partie de détermination d'accueil détermine que l'objet est accueilli dans le godet; et

une partie de calcul de la valeur de la charge cumulée pour calculer une valeur de la charge cumulée de l'objet accueilli en ajoutant une valeur de la charge temporairement stockée dans la mémoire lorsque la partie de détermination de décharge détermine que l'objet accueilli dans le godet est déchargé.

**5.** Machine de travail selon la revendication 4, dans laquelle

la partie de détermination de décharge détermine qu'une tâche de chute consistant à décharger une partie de l'objet accueilli dans le godet est effectuée lorsque l'angle du godet se trouve sur le côté non-décharge au-delà de l'angle de référence de décharge après que l'angle du godet se trouve sur le côté de décharge au-delà de l'angle de référence de décharge, et que la valeur de la charge détectée par la partie de détection de charge est égale ou supérieure au seuil de charge, après que la partie de détermination d'accueil détermine que l'objet est accueilli dans le godet, et

la partie stockage temporaire met à jour la valeur de la charge temporairement stockée dans la mémoire avec la valeur de la charge détectée par la partie de détection de charge après que la partie de détermination de décharge détermine que la tâche de chute est effectuée.

FIG.1

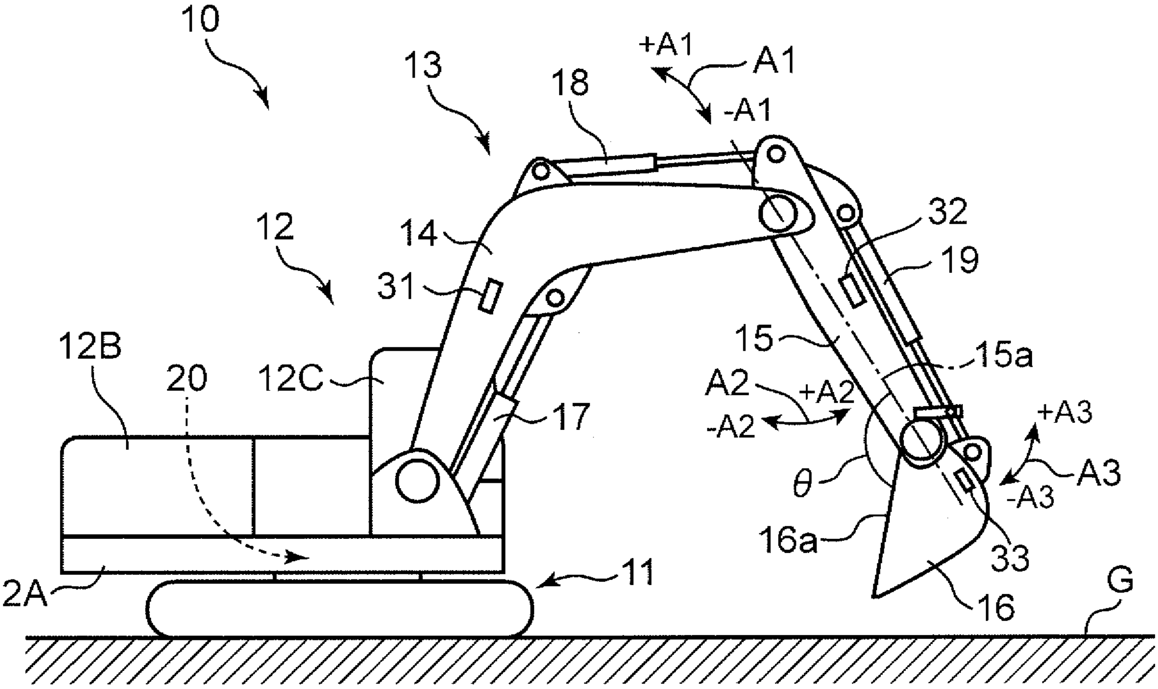
10
13
18
+A1
A1
-A1
12
14
32
19
31
15
15a
12B
20
12C
17
A2
+A2
-A2
+A3
θ
A3
-A3
16a
33
11
G
12A
16

FIG.2

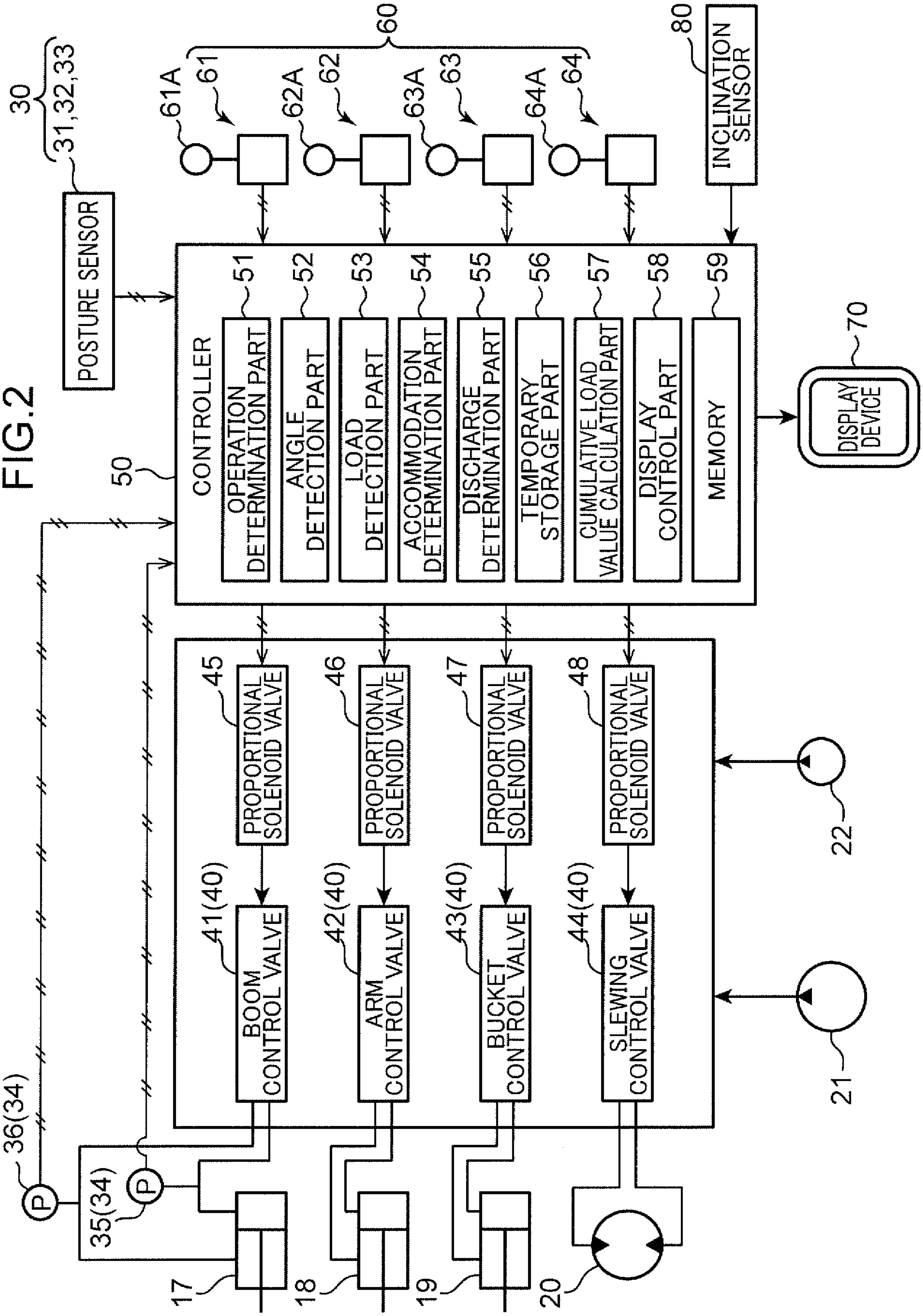
POSTURE SENSOR
30
31,32,33
60
61A
61
62A
62
63A
63
64A
64
80
INCLINATION SENSOR
50
CONTROLLER
51
OPERATION DETERMINATION PART
52
ANGLE DETECTION PART
53
LOAD DETECTION PART
54
ACCOMMODATION DETERMINATION PART
55
DISCHARGE DETERMINATION PART
56
TEMPORARY STORAGE PART
57
CUMULATIVE LOAD VALUE CALCULATION PART
58
DISPLAY CONTROL PART
59
MEMORY
70
DISPLAY DEVICE
45
PROPORTIONAL SOLENOID VALVE
46
PROPORTIONAL SOLENOID VALVE
47
PROPORTIONAL SOLENOID VALVE
48
PROPORTIONAL SOLENOID VALVE
41(40)
BOOM CONTROL VALVE
42(40)
ARM CONTROL VALVE
43(40)
BUCKET CONTROL VALVE
44(40)
SLEWING CONTROL VALVE
22
21
36(34)
P
35(34)
P
17
18
19
20

FIG.3

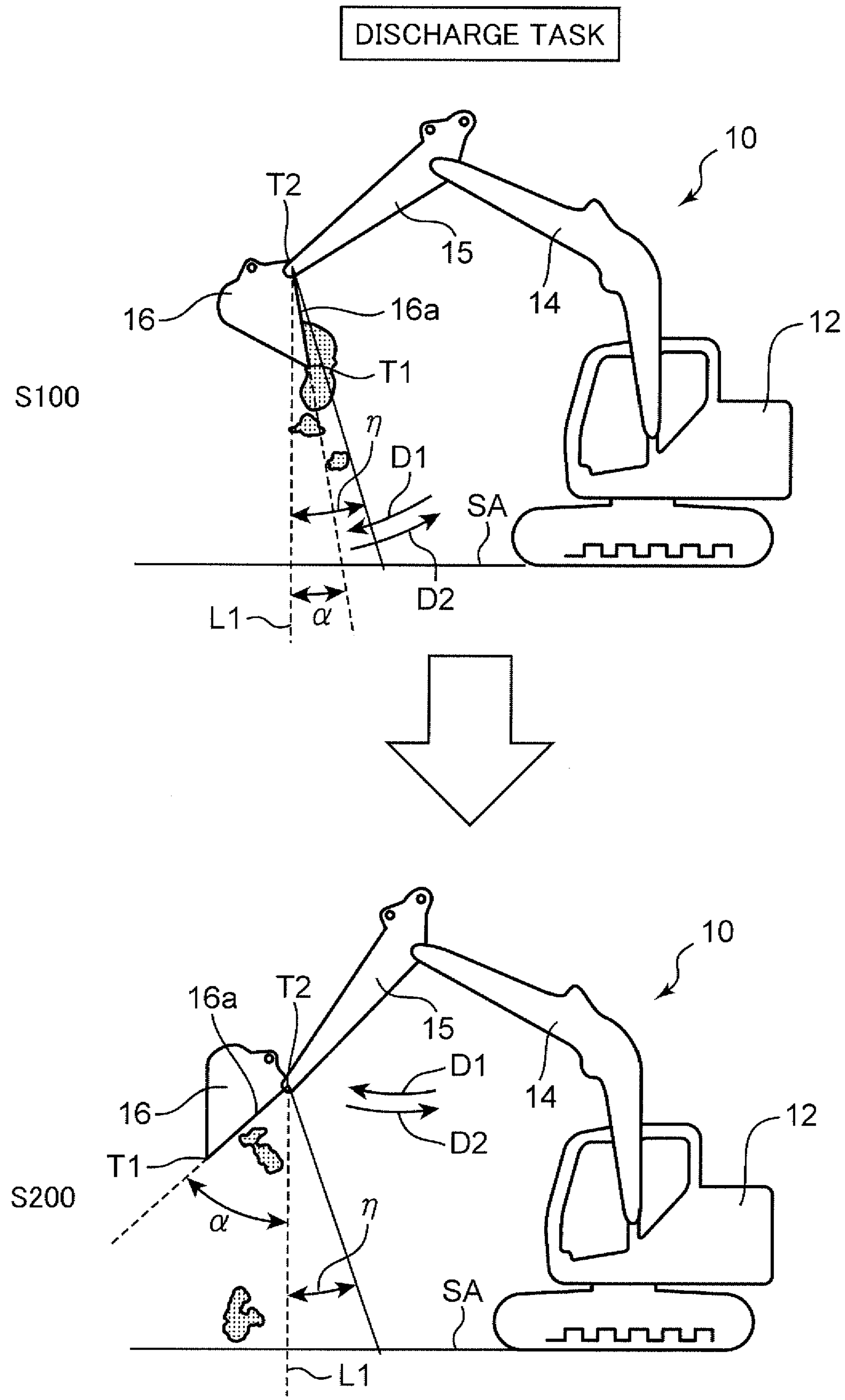
DISCHARGE TASK
10
T2
15
14
16
16a
12
T1
S100
η
D1
SA
D2
L1
α
10
16a
T2
15
D1
16
14
D2
12
T1
S200
α
η
SA
L1

FIG.4

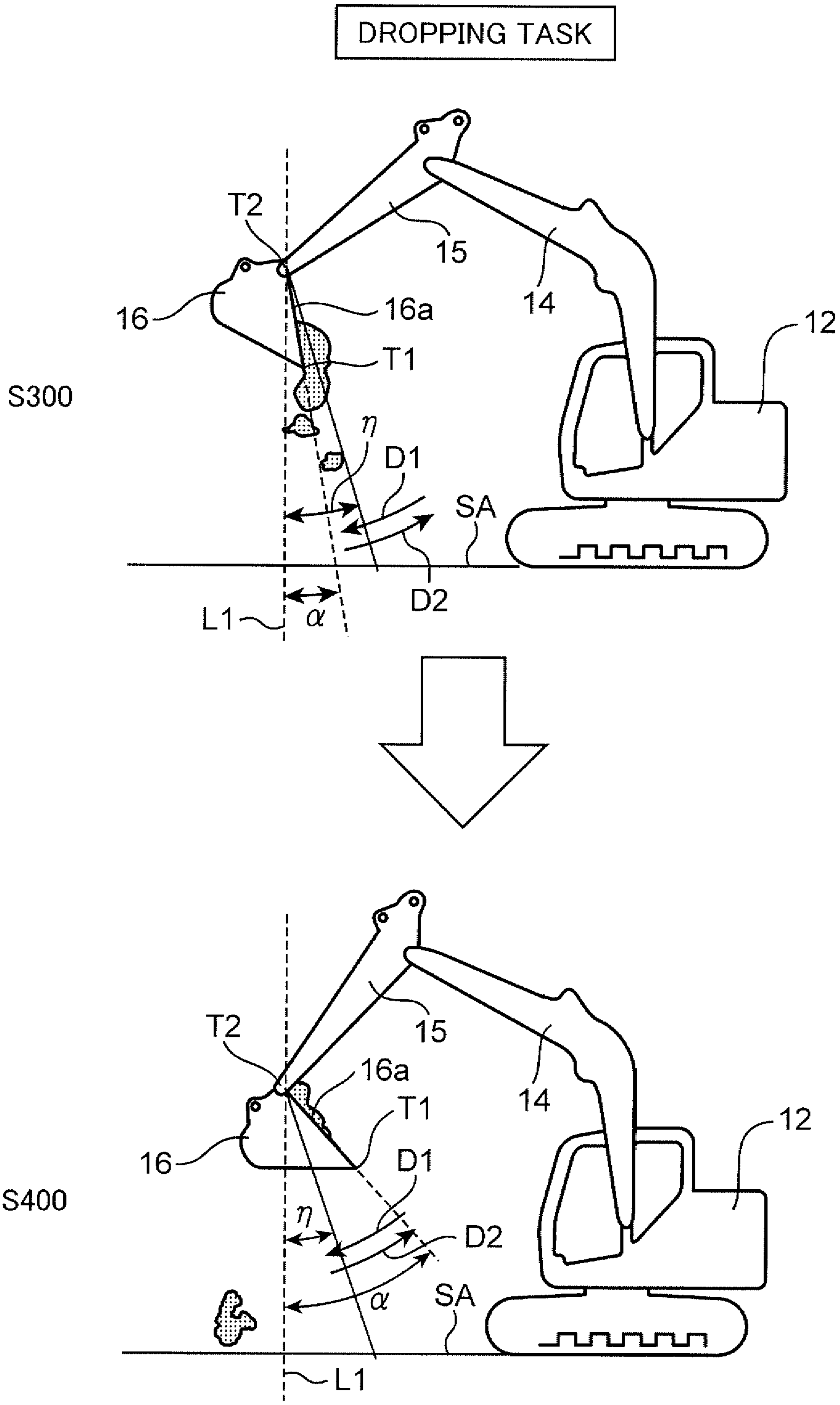
DROPPING TASK
S300
T2
15
16
16a
14
12
T1
η
D1
SA
D2
L1
α
S400
T2
15
16a
T1
14
12
16
D1
η
D2
α
SA
L1

FIG.5

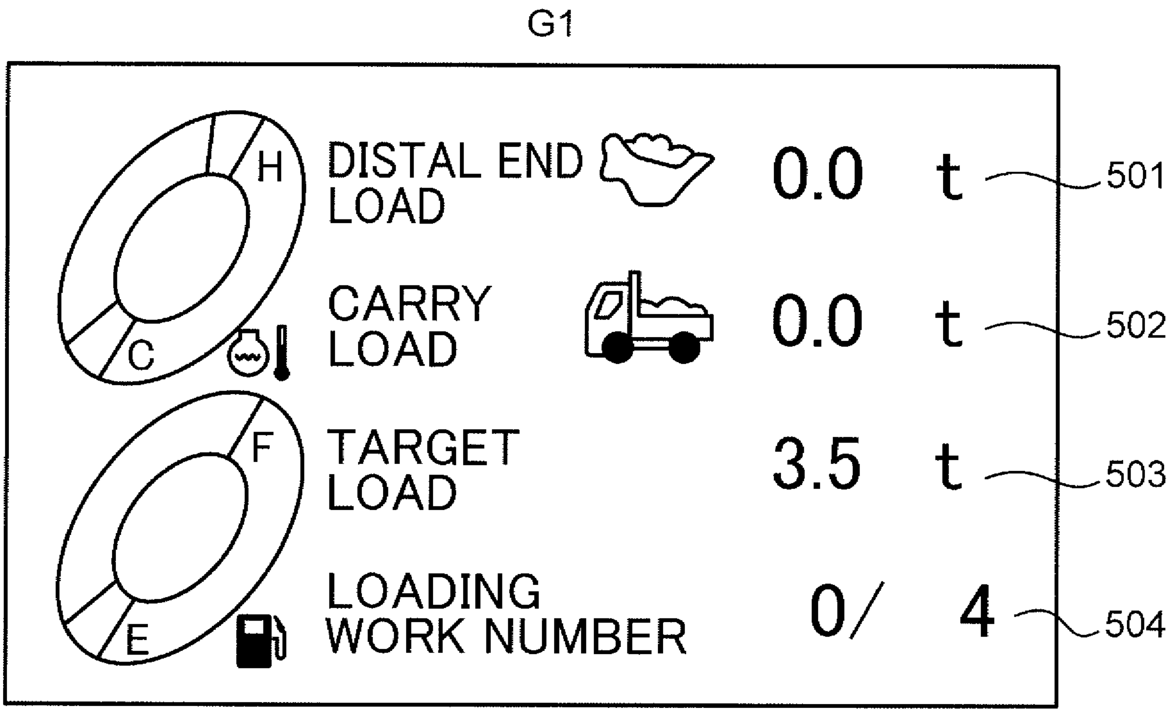
G1
H
C
F
E
DISTAL END LOAD
0.0 t
CARRY LOAD
0.0 t
TARGET LOAD
3.5 t
LOADING WORK NUMBER
0/ 4
501
502
503
504

FIG.6

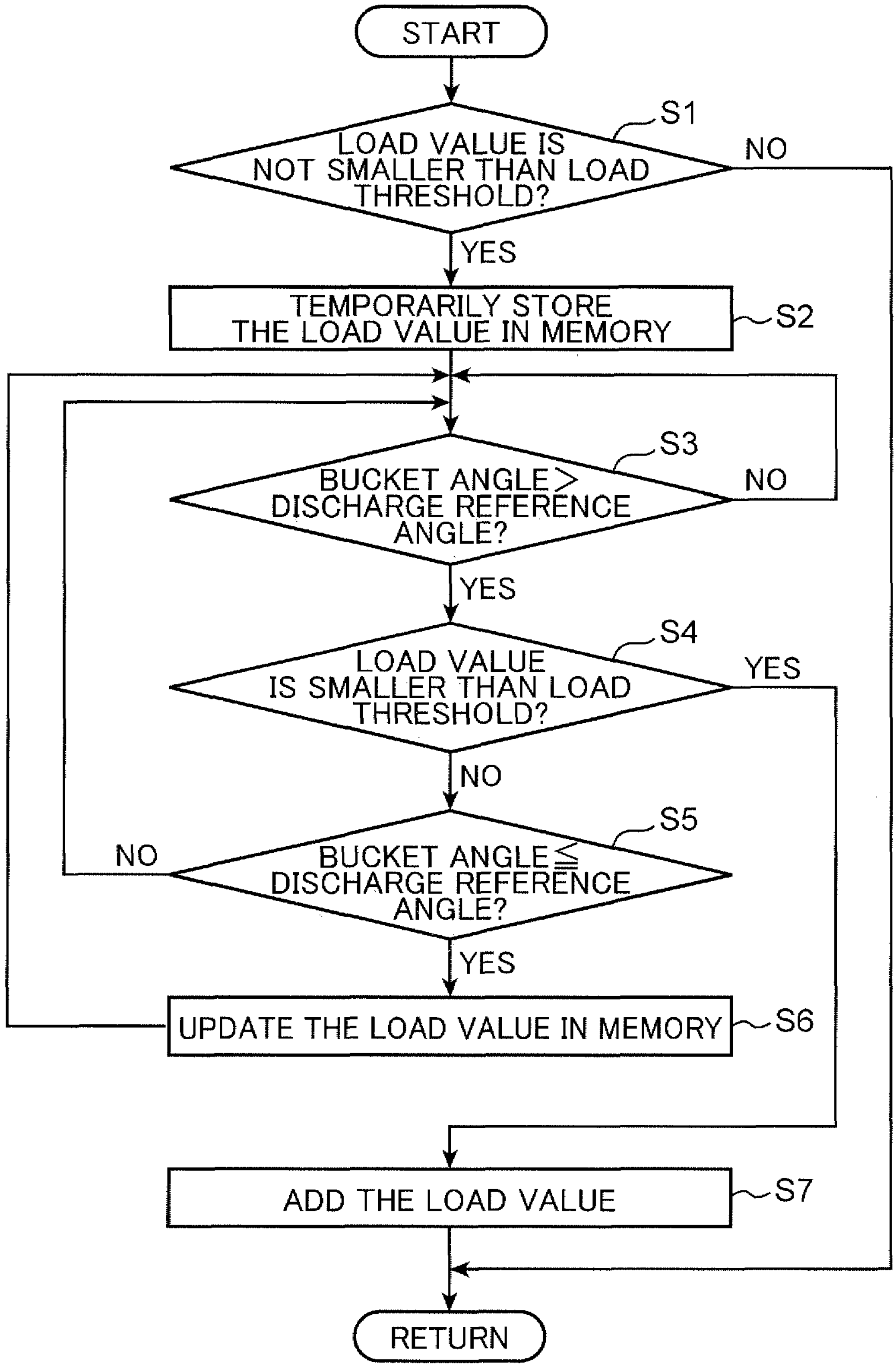
START
LOAD VALUE IS NOT SMALLER THAN LOAD THRESHOLD?
S1
NO
YES
TEMPORARILY STORE THE LOAD VALUE IN MEMORY
S2
BUCKET ANGLE > DISCHARGE REFERENCE ANGLE?
S3
NO
YES
LOAD VALUE IS SMALLER THAN LOAD THRESHOLD?
S4
YES
NO
BUCKET ANGLE ≦ DISCHARGE REFERENCE ANGLE?
S5
NO
YES
UPDATE THE LOAD VALUE IN MEMORY
S6
ADD THE LOAD VALUE
S7
RETURN

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2019360169 A1
- JP 2019158774 A